# EUROPEAN PATENT APPLICATION

(11) **EP 1 215 894 A2**
(43) Date of publication of application: **19.06.2002**
(21) Application number: 01660213.8
(22) Date of filing: 20.11.2001
(51) Int. Cl.: H04N 5/232

(54) **Method and device for data transmission**

(30) Priority: 08.12.2000 FI 20002702
(71) Applicant: Nokia Corporation, 02150 Espoo (FI)
(72) Inventor: Haavisto, Janne, 36110 Ruutana (FI)
(74) Representative: Johansson, Folke Anders

(57) **Abstract**

A method and device for data transmission between an electronic device and a camera module integrated into it. In the method, image data and statistical data generated from it are transmitted in a data frame from the camera module to the electronic device on a common data transmission bus in the form of a serial synchronized differential signal in such a way that the image data and the statistical data are separated from each other in the data frame by means of a synchronization code. In the data transmission, subLVDS transmitters/receivers are used.

## Description

The present invention relates to devices that are connected to a camera. Specifically but not necessarily, the invention relates to data transmission between a mobile communications terminal display and camera module.

### Background of Technology

In digital cameras and digital video cameras, the conversion of an optical image to electric signals is implemented by means of an image sensor, typically a light sensitive semiconductor element (Charge Coupled Device CCD or Complementary Metal Oxide Semiconductor CMOS). Said element is a plate comprising small and regular light and colour sensitive picture elements or pixels, also called a detector matrix. The resolution of the matrix varies by its physical size and granularity. Typically, the image sensor comprises hundreds of thousands of pixels. In VGA resolution (Video Graphics Array), for example, 640 x 480 = 307,200 pixels are used. The utilization of highly developed CMOS technology in image sensor manufacturing has enabled the integration of digital and analog electronics on the same semiconductor element with the image sensor. Decreases in the size and weight of the camera module have made it possible to integrate such a module into even smaller electronic devices, such as portable computers and mobile communication terminals.

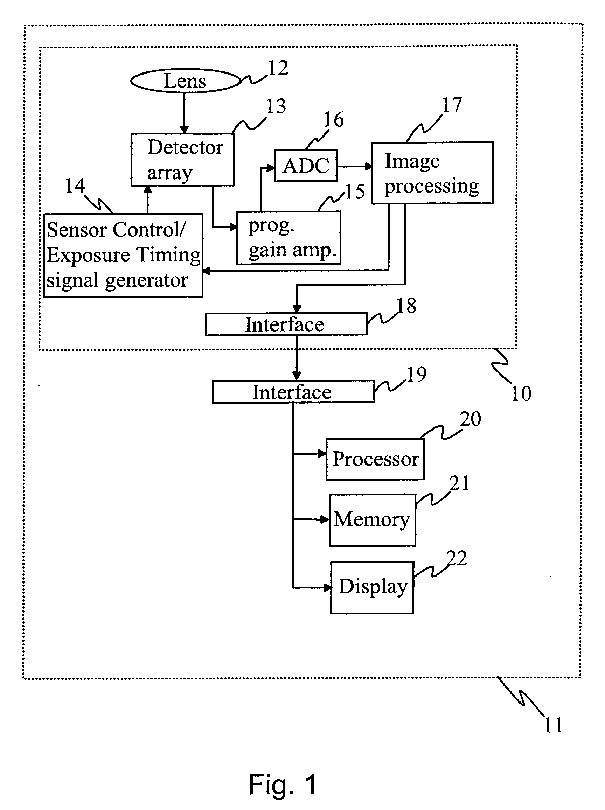

The structure of a prior art camera module is shown in Figure 1. In this solution, all functional blocks and operations related to image processing are integrated into the camera module 10. The module comprises one or more optical lenses 12, a light sensitive CMOS sensor element 13, a control unit 14 for adjusting the CMOS sensor element, and a programmable analog amplifier 15 (Programmable Gain Amplifier, PGA). By means of an AD converter 16, the analog image signal is converted to a digital form, after which it can be processed (reference 17) with various image-processing functions, for example, by adjusting the colour and white balance. Through connections 18 and 19, the image signal is transferred, for example, to be stored into the memory 21 of electronic device 11 or shown on its display 22. The data transmission between user interface 10, memory 21, and display 22 can be controlled, for example, by processor 20.

A fully integrated solution of above described type is applicable to devices with an integrated camera module that do not have enough processing power for image-processing operations. As every image-processing operation increases the silicon surface of the camera module, and thus the price, physical size, and weight of the equipment, it is preferable to divide the image-processing functional blocks between the electronic device and the camera module integrated into it.

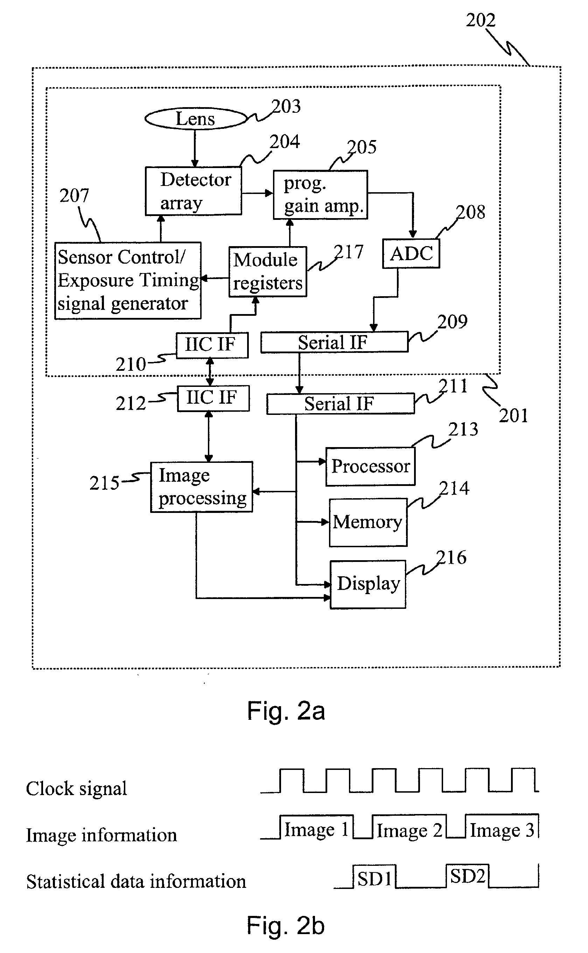

A prior art division of functions between the camera module and the electronic device is shown in Figure 2a, where there is a unidirectional parallel interface 209, 211 between the electronic device 202 and the camera module 201 integrated into it. The interface may comprise, for example, 8 bits for data and one bit for each of the following: clock signal, synchronization of data frame to be sent, and synchronization of pixel row forming the image. The image data is generated in the camera module during the read-out period of image sensor 204 and transmitted via said parallel interface (references 209, 211) to the electronic device, where the received image data is used to calculate statistical data which is in turn transmitted via an IIC (Inter Integrated Circuit) bus (references 210, 212) to the camera module register 217 that is used to control functional blocks in the camera module, such as the controller 207 of image sensor 204 and the image signal amplifier 205. The AD converted (reference 208) image data is transmitted to the electronic device 202, where the image data is processed, statistical data is calculated from it, and it is transferred as an image to the display 216 of the device or stored into memory 214 of the device. A separate bus (for example IIC or RS232) is used for the transmission of statistical data from the electronic device to the camera module; through this bus, registers in the camera module can be accessed for image-processing operations. The data required for manipulating the image is obtained from the statistical data calculated from the image data in the electronic device. Necessary information is also fetched via the IIC bus from the camera module register 217, and the final calculation of image manipulation parameter values is performed by the processor 213 in the electronic device. The parameter resulting from the calculation is sent via the control bus (210, 212) to the camera module register 217, for example to be used by the image sensor controller 207 or for the control of functional blocks such as the programmable amplifier (reference 205). A control data bus of the type described above is not very fast, however; the typical data rate of an IIC bus is around 100 kbps. The low data rate of the bus is manifested as an observable delay in image stabilization, for example when using a digital video camera in well-lighted conditions and moving to a darker area or vice versa. To utilize statistical data in image processing, a large amount of data must be transmitted between the camera module and the electronic device immediately after sending the image data from the camera module to the electronic device for processing. The cause of the delay, according to Figure 2b, is as follows: after the image data for Image 1 has been generated in the camera module, it is sent to the electronic device for final image processing; for this, the statistical data SD1 for Image 1 is calculated from the received image data, and the data SD1 is sent via the IIC bus to the camera module register 217. Because of the low data rate of the IIC bus, transmission of statistical data for Image 1 to the camera module via the IIC bus is only completed when the transmission of image data for Image 2 to the device is already in progress. The result is that the statistical data for Image 1 can only be used to process Image 3, not Image 2 which would be preferred. The delay is further emphasized when the change of lighting conditions on the image sensor surface happens even faster.

### Summary of the Invention

A method and device has now been invented for the transmission of data between an electronic device (host device) and a camera module connected to it. In the method according to the invention, statistical data collected from unprocessed image data is sent interlaced with said image data on the same communications channel essentially at the same time in the same data frame so that the image data bits and the statistical data bits are separated from each other by special synchronization codes. The image data and statistical data can be easily and quickly transmitted to the electronic device in the form of a serial differential signal on a special CCP bus (Compact Camera Port). The received image data can be processed in the electronic device based on the statistical data collected from said image data in a preferred way without delay. The means for processing the image data can be either computer programs stored in memory in the electronic device or the camera module, or electronic components carrying out the operations. Compared to prior art, the implementation according to the invention is faster because there are no delays, and the manufacturing costs are lower because there are fewer transmission lines and connectors. In addition, the simplified data transmission bus makes it easier to design the camera module, and the software in the electronic device can be less time-dependent.

According to a first aspect of the invention, there is implemented a method for the transmission of data between a camera module and an electronic device, said method comprising the phases of generating image data in the image sensor of the camera module and collecting statistical data from said image data, characterised in that in addition, in the method, said image data and said statistical data is transmitted from the camera module to the electronic device via a common transmission bus, at least one value of at least one parameter related to image processing is generated based on said transmitted statistical data, said image data is processed using said at least one value of at least one parameter, and an image is generated from said processed image data.

According to a second aspect of the invention, there is implemented an electronic device, into which a camera module is integrated, comprising means for generating image data, characterised in that in addition, the device comprises means for collecting statistical data from said image data, means for transmitting image data and statistical data from the camera module to the electronic device using a common data transmission bus, means for generating at least one value of at least one image-processing parameter from said transmitted statistical data, means for processing said image data based on said at least one value of at least one image-processing parameter, and means for generating an image from the processed image data.

Prior art has been discussed by referring to Figures 1, 2a, and 2b. In the following, the invention will be discussed in more detail by referring to Figures 3 to 5, in which
Figure 1 illustrates a prior art system for the transmission of data between an electronic device and a camera module connected to it,
Figure 2a illustrates a prior art system for dividing functions between the electronic device and the camera module,
Figure 2b illustrates the delays between signals in a system according to Figure 2a,

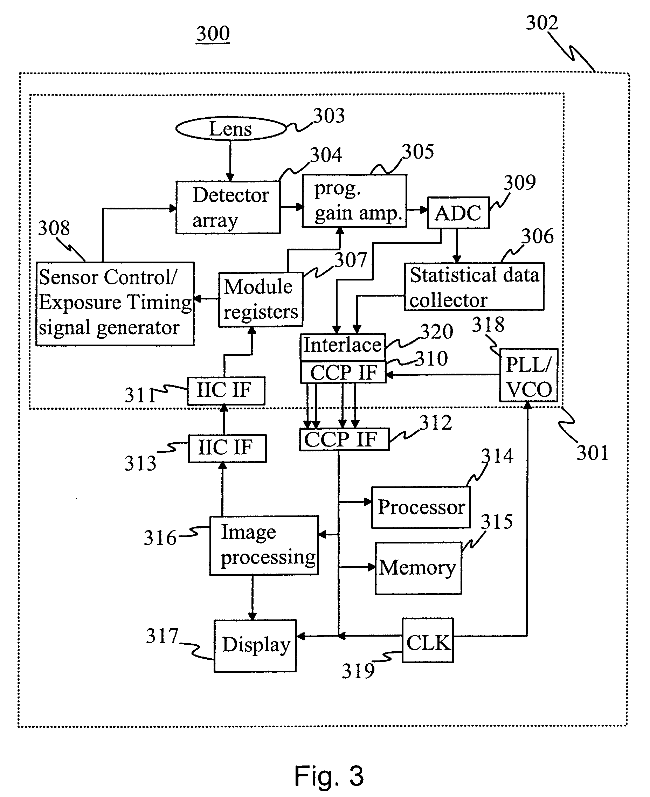

Figure 3 illustrates a system according to the invention for the transmission of data between an electronic device and a camera module connected to it,

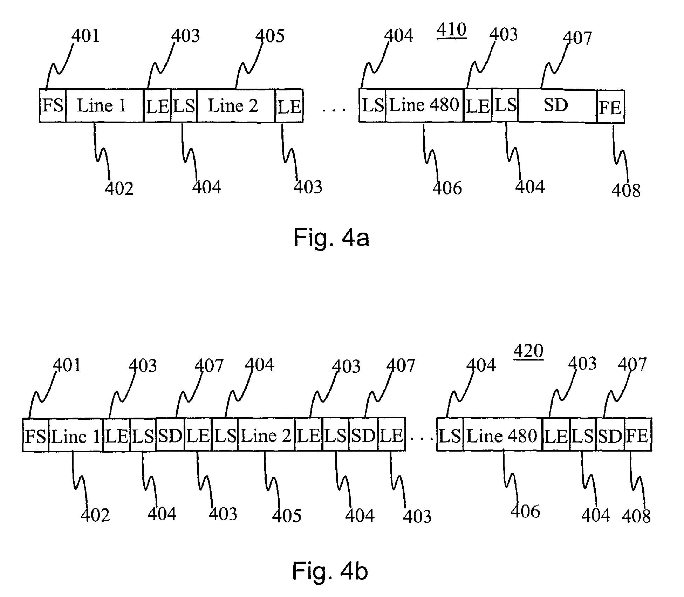

Figures 4a and 4b illustrate alternative implementations for interlacing the statistical data and the image data in the data frame,

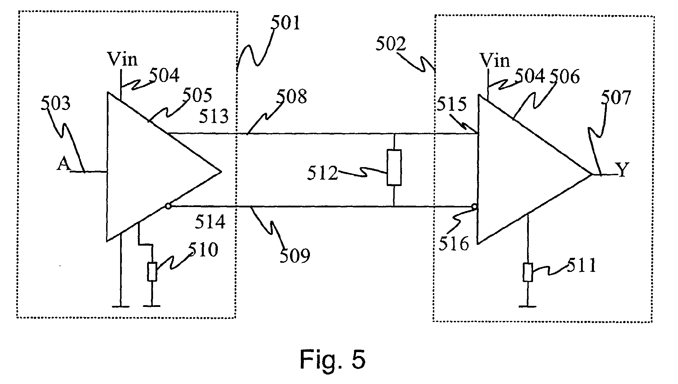

Figure 5 illustrates data transmission equipment for the transmission of data between the electronic device and the camera module.

Figure 3 illustrates a system according to the invention for the transmission of data between an electronic device and a camera module connected to it. Device 300 comprises an electronic device 302 and a camera module 301 integrated into it, said camera module and electronic device, for example a mobile communications terminal, being integrated into one single device 300. The camera module 301 comprises a lens 303 for focusing an optical image on the surface of image sensor (detector array) 304 which comprises light and colour sensitive picture elements or pixels arranged in the form of pixel rows in a matrix-like format on the surface, a programmable analog amplifier 305 for amplifying the image signal, an AD converter 309 for converting the analog signal to a digital form, an image sensor controller 308 for adjusting, for example, the image sensor exposure time, a register 307 for storing image-processing parameters required by amplifier 305 and controller 308, a statistical data collector 306, an interlacing device 320, a transmission bus (references 310, 312) and another transmission bus (references 311, 313) for transmitting data to the register 307 for the purpose of transferring image data and statistical data from the camera module to the electronic device.

The image is generated through camera lens 303 to the image sensor detector matrix, where each picture element or pixel of the matrix converts light hitting the pixel to an analog signal which is amplified by amplifier 305 and further converted by AD converter 309 to image data in a digital format. From the generated image data, statistical data (reference 305) is collected. This can comprise for example information on the image brightness. Here, the statistical data has been collected from the digital signal, but it can also be collected from the analog signal. The image data and statistical data are interlaced into the same data frame (reference 320) which is transmitted on a special CCP bus (Compact Camera Port) that is a bus internal to the device 300, implemented in the transmitting and receiving ends as a subLVDS circuit, to the electronic device, for example to memory 315 for further processing. In the CCP bus, the preferred way is to use one subLVDS transmitter/receiver pair, but it is also possible to use several transmitter/receiver pairs. The data transmission between the camera module and the electronic device is carried out using a serial synchronized differential signal. An alternative way of transmitting the image data and statistical data essentially at the same time is to use two separate buses, for example subLVDS buses, so that the image data is transmitted over said first bus and the statistical data is transmitted over said second bus. The number of data transmission buses used between the camera module and the electronic device is not limited to said one or two buses, but also a higher number of buses can be used to implement the data transmission methods discussed above.

In the electronic device, the image data and statistical data are separated from the received data frame. From the statistical data, image-processing parameter values are calculated (references 314 to 316). These can be used to process said image data or the image generated on the display, or to adjust the operation of image sensor 304 to generate the next image. The image processing block 316 can comprise parameters such as image scaling, white balancing to adjust the colour balance to prevailing lighting conditions, adjusting exposure control and gain control, and for example, RGB-YUV image format conversion. It is obvious that the image processing block can, in addition to said parameters or in place of them, comprise other parameters related to image processing. The operation of the image sensor is controlled by image sensor control unit 308, for example by changing the exposure time or image signal gain. The control signal is transmitted via the IIC bus (references 311, 313) from the electronic device 302. The clock signal is supplied by the clock 319 in the electronic device to the camera module where it is converted to the frequency used on the CCP bus by means of a phase locked loop (PLL) and voltage controlled oscillator (VCO) (reference 318). The clock frequency supplied by the electronic device can be for example 13 MHz which will be converted in the camera module to the 104 MHz frequency used on the CCP bus. The image signal is received in the electronic device by means of a SubLVDS (Sub-Low Voltage Differential Signalling) receiver, and the image data is transferred either to display 317 or memory 315.

Only the most essential functions, such as image sensor control, AD conversion, analog signal amplification, as well as the collection of statistical data and interlacing of image data and statistical data into the same data frame are integrated into the camera module, the processor 314 in the electronic device processing the other functions by means of computer programs. This way, the physical dimensions of the camera module can be made smaller and its mechanical structure simpler.

The system clock signal can alternatively be implemented by supplying the clock signal from the electronic device to the camera module using subLVDS bus output. In this case, no separate phase-locked loop (PLL) or voltage controlled oscillator (VCO) are needed in the camera module; in prior art, these components have been used for converting the signal supplied to the camera module to the appropriate frequency. In addition, this system clock can be used as the CCP clock at the same time. The difference compared with the previous implementation is that in this case, the clock signal is always on. The present CCP block allows the clock signal to be operational all the time, however, as the start and end points of the image and statistical data are determined by the synchronization codes.

In this embodiment, the so-called bypass CCP mode, data is both written to the bus and read from the bus on the positive edge. Longer delays in bypass mode make this possible. The CCP clock signal is not supplied by the camera module but the receiving end, that is, the electronic device. The clock signal is sent from the electronic device to the camera module, for example to a register where data is fetched from. Because of the signal transmission delay, the clock signal is in the up state in the electronic device earlier than in the camera module. More delay is caused by the fact that the data signal must be transmitted back from the camera module to the electronic device before it can be read.

Figures 4a and 4b illustrate alternative implementations for interlacing the statistical data and the image data in the same data frame. The data frame (references 410, 420) comprises the image data and statistical data for one image. The image data can be divided into image data units (402, 405, 406, 407) line by line, so the image data at VGA resolution can be generated for example from image data units comprising either 640 vertical lines or 480 horizontal lines. It is obvious that the implementation of the invention is not restricted to the numbers of pixel rows discussed above, or to be used only for the transmission of VGA images, but also other image sizes can be used. The statistical data can be implemented either as one statistical data unit comprising all image data units of the data frame, as in Figure 4a, or in such a way that each statistical data unit comprises the statistical data for one image data unit, as shown in Figure 4b. To visualize the following alternative implementations, the image data in the data frame comprises 480 horizontal lines.

The first alternative implementation in Figure 4a illustrates the interlacing of statistical data and image data in the same data frame, said data frame comprising image data units, statistical data units and synchronization codes which are used to separate the statistical data units from the image data units and the different data frames from each other. The location or order of the image data and statistical data inside the data frame are insignificant. As a visualizing example, the image size corresponds to the VGA resolution discussed above, comprising 640 vertical lines and 480 horizontal lines. In this case, the image data is transmitted in such a way that after the last data unit (reference 406), one more data unit (reference 407) is sent, comprising the statistical data for the image. Because the amount of statistical data can be less than or greater than the amount of data in one image data line, the transmission of the last line can take a shorter or longer time, correspondingly. This does not cause any problems, though, as the frame is defined using special synchronization codes so that the start of frame is denoted by synchronization code FS (Frame Start) (reference 401) and the end of frame with code FE (Frame End) (reference 408). Inside the frame, the image data and statistical data for each line comprises also the synchronization codes LS (Line Start) (reference 404) to indicate start of record, and LE (Line End) (reference 403) to indicate end of record.

In the example case, the Frame Start synchronization code FS (reference 401) is transmitted, after which comes the image data for the first line (reference 402) and the Line End synchronization code LE (reference 403). Lines 2 to 480 are each transmitted so that before each line, the synchronization code LS (reference 404) is transmitted, indicating the start of each line, and after the transmission of image data for each line, the synchronization code LE (reference 403) indicating the end of each line is transmitted. The statistical data SD (reference 407) is transmitted after the image data for line 480 (reference 406). Before transmitting the statistical data SD, the synchronization code LS (reference 404) is transmitted, and after the line, the synchronization code FS (reference 408) is transmitted, indicating the end of transmitted frame.

At the receiving end, the image data and statistical data can easily be separated from each other for example by assuming that in the frame, the 480 first data units separated by synchronization codes contain image data, and the 481st data unit contains statistical data.

Another alternative implementation in Figure 4b comprises interlacing the image data and statistical data inside the frame so that the image data in the first line is transmitted first, and after this, the statistical data for the corresponding line is sent. The image data and corresponding statistical data for other lines in the frame is transmitted similarly.

The transmission of a frame starts with synchronization code FS (reference 401), after which the image data for line 1 is transmitted (reference 402), and finally the end of image data in line 1 is indicated by sending the synchronization code LE (reference 403). The synchronization code LS (reference 404) indicates the start of transmission of statistical data SD for line 1 (reference 407), after which the statistical data SD for line 1 (reference 407) is transmitted; finally, the end of statistical data for line 1 is indicated by the synchronization code LE (reference 403). Each of the lines 2 to 479 are transmitted in the following way: first comes the LS code (reference 404), after this the image data unit for the line (reference 405, 406), and finally the LE code (reference 403). Line 480 is transmitted similarly to lines 2 to 479 with the difference that after the statistical data for the last line, a FE code (reference 408) is transmitted to indicate end of frame. At the receiving end, the image data and statistical data can be easily separated from each other by utilizing the synchronization codes discussed above.

In the implementations discussed above, the statistical data can also be synchronized by means of separate synchronization codes such as SDS (Statistical Data Start) and SDE (Statistical Data End).

Figure 5 illustrates an implementation for the transmission of image data and statistical data between the electronic device and the camera module. The data transmission is implemented specifically but not necessarily by means of a subLVDS type current signal transmitter 501 and receiver 502 running on the supply voltage of a mobile communications terminal (for example 1.5 to 1.8 V, a typical LVDS supply voltage being approximately 3.0 V). The transmitter 501 comprises supply voltage Vin input 504 to control circuit 505, input 503 for receiving the bit element to be transmitted, outputs 513, 514, for transmitting a non-inverting and inverting current signal, and an external current set resistor 510. The receiver 502 comprises supply voltage Vin input 504 to control circuit 506, inputs 515, 516 for receiving a non-inverting and inverting current signal, output 507 for generating a bit element from the received current signals and an external gain set resistor 511. The signal is transferred from transmitter to receiver on the transmission lines 508 and 509 using the self biasing signaling method according to Figure 5a, illustrated by the resistor 512 (for example, 100) between said transmission lines.

The principle of operation does not differ from an ordinary LVDS circuit. The current signal is interpreted as a 1 bit when the voltage of non-inverting line 508 is positive and the voltage of inverting line 509 is negative. Correspondingly, a 0 bit is indicated by the reverse situation. A subLVDS type current signal transmitter/receiver pair can be used at high data rates while keeping the electromagnetical noise at a minimum.

This paper presents the implementation and embodiments of the present invention, with the help of examples. A person skilled in the art will appreciate that the present invention is not restricted to details of the embodiments presented above, and that the invention can also be implemented in another form without deviating from the characteristics of the invention. The embodiments presented should be considered illustrative, but not restricting. Thus, the possibilities of implementing and using the invention are only restricted by the enclosed claims. Consequently, the various options of implementing the invention as determined by the claims, including the equivalent implementations, also belong to the scope of the invention.

## Claims

1. A method for the transmission of data between a camera module (301) and an electronic device (302), said method comprising the steps of generating image data in the image sensor (304) of the camera module, said image sensor comprising at least one row of pixels, and said image data comprising the data generated by said row of pixels, and collecting statistical data from said image data, **characterised in that** the method further comprises: transmitting said image data and said statistical data from the camera module to the electronic device essentially at the same time.

2. A method according to claim 1, **characterised in that** said image data and said statistical data are transmitted interlaced with each other on at least one common bus.

3. A method according to claim 2, **characterised in that** said image data and said statistical data are transmitted in the same data frame, said data frame comprising at least one image data unit, at least one statistical data unit, and at least one synchronization code to separate said image data unit from said statistical data unit.

4. A method according to claim 3, **characterised in that** said image data unit comprises image data generated by at least one said row of pixels and that said statistical data unit comprises statistical data for said image data generated by at least one row of pixels.

5. A method according to claim 4, **characterised in that** said row of pixels is a vertical or horizontal row in said image sensor.

6. A method according to claim 5, **characterised in that** said data frame is transmitted from the camera module to the electronic device in the form of a serial synchronized differential signal.

7. A method according to claims 2 to 6, **characterised in that** the camera module and the electronic device are integrated into one single device and that said bus is a device-internal bus.

8. A method according to claim 7, **characterised in that** said transmitted statistical data is used as the generation basis for at least one parameter related to image processing.

9. A method according to claim 8, **characterised in that** said at least one image-processing parameter created is used for the processing of the image to be generated.

10. A method according to claim 9, **characterised in that** said at least one image-processing parameter is used for adjusting the image sensor of the camera module to generate image data for the next image.

11. A device (300) comprising a camera module (301) and an electronic device (302), comprising means for generating image data (303, 304) in the image sensor (304) of the camera module, said image sensor comprising at least one row of pixels and said image data comprising the data generated by said rows of pixels, means (305) for collecting statistical data on said image data, **characterised in that** the device further comprises means (310, 312, 320) for transmitting image data and statistical data from the camera module to the electronic device essentially at the same time.

12. A device according to claim 11, **characterised in that** said data transmission means are implemented for transmitting said image data and said statistical data in the same data frame, said data frame comprising at least one image data unit, at least one statistical data unit, and at least one synchronization code to separate said image data unit from said statistical data unit.

13. A device according to claim 12, **characterised in that** said data frame comprises said image data and said statistical data interlaced with each other and that said data frame is transmitted from the camera module to the electronic device on at least one bus.

14. A device according to claim 13, **characterised in that** said data transmission means are additionally implemented for transmitting said data frame from the camera module to the electronic device in the form of a serial synchronized differential signal.

15. A device according to claims 11 to 14, **characterised in that** the device also comprises means (316, 314) for generating an image-processing parameter from the transmitted statistical data.

16. A device according to claim 15, **characterised in that** in addition, the device comprises means for image data processing (316, 314) to process the transmitted image data based on said image-processing parameter.

17. A device according to claim 16, **characterised in that** said means for image data processing have been implemented for processing the image to be generated.

18. A device according to claim 17, **characterised in that** said means for image data processing have additionally been implemented to control the image sensor in acquiring the next image.

19. A device according to claims 11 to 18, **characterised in that** said device is a mobile communications terminal.

20. A method according to claim 19, **characterised in that** said mobile communications terminal and camera module are integrated into one single device and that said bus is a device-internal bus.
